# EUROPÄISCHE PATENTANMELDUNG

(11) **EP 3 954 573 A1**
(43) Veröffentlichungstag der Anmeldung: **16.02.2022**
(21) Anmeldenummer: 21186331.1
(22) Anmeldetag: 19.07.2021
(51) Int. Cl.: B60L 53/18, B60L 3/00, B60L 53/16, G01K 1/14, H01R 13/66

(54) **VORRICHTUNG ZUR TEMPERATURÜBERWACHUNG EINER LEISTUNGSÜBERTRAGUNGSSTRECKE**

(30) Priorität: 13.08.2020 DE 102020121329
(71) Anmelder: Kromberg & Schubert GmbH Cable & Wire, 46414 Rhede (DE)
(72) Erfinder: Greiner, Martin, 30966 Hemmingen (DE); Pieper, Matthias, 59399 Olfen (DE); Herzog, Dietmar, 40885 Ratingen (DE)
(74) Vertreter: Staeger & Sperling Partnerschaftsgesellschaft mbB

(57) **Zusammenfassung**

Die Erfindung betrifft eine Vorrichtung (1) zur Temperaturüberwachung einer Leistungsübertragungsstrecke (2), insbesondere in einem Kraftfahrzeug, mit einem Steckverbinder (21) und wenigstens einer elektrischen Leitung (22), die an einem Leitungsende mit jeweils einem Leistungskontakt (211) des Steckverbinders (21) verbunden ist, wobei parallel zum Verlauf der wenigstens einen elektrischen Leitung (22) eine Sensorstrecke (23) mit wenigstens einem Temperatursensor (5) zur Erfassung einer Temperatur an einer vorbestimmten Position der elektrischen Leitung (22) vorgesehen ist, wobei an dem jeweiligen Leistungskontakt (211) des Steckverbinders (21) jeweils ein weiterer Temperatursensor (6) zur Erfassung einer Temperatur an einer vorbestimmten Position des Leistungskontakts (211) vorgesehen ist, wobei der jeweilige Temperatursensor (5, 6) mittels jeweils einer Sensorleitung (7) mit jeweils einem in dem Steckverbinder (21) angeordnet ausgebildeten Sensorkontakt (212) für eine Verbindung mit einem Steuergerät (8) verbunden ist. Darüber hinaus betrifft die Erfindung ein Verfahren zur Temperaturüberwachung einer Leistungsübertragungsstrecke (2), insbesondere in einem Kraftfahrzeug, mit einer Vorrichtung (1) gemäß der vorstehenden Offenbarung.

## Beschreibung

Die Erfindung betrifft eine Vorrichtung zur Temperaturüberwachung einer Leistungsübertragungsstrecke, insbesondere in einem Kraftfahrzeug, mit einem Steckverbinder und wenigstens einer elektrischen Leitung, die an einem Leitungsende mit jeweils einem Leistungskontakt des Steckverbinders verbunden ist. Außerdem betrifft die Erfindung ein Verfahren zur Temperaturüberwachung einer Leistungsübertragungsstrecke der Vorrichtung.

In elektrischen Leitungen einer Leistungsübertragungsstrecke entstehen durch den Stromfluss und eine damit verbundene konduktive Erwärmung sowie durch eine Überlagerung von externen Wärmequellen hohe Temperaturen, welche insbesondere bei sensiblen Anlagen hinsichtlich einer Überhitzung der Komponenten zu überwachen sind. Aus dem Stand der Technik bekannte Temperaturüberwachungen einer Leistungsübertragungsstrecke sind jedoch überwiegend ungeeignet für Fahrzeugbordnetze.

Aus dem Bereich der Ladesysteme mit Steckverbindern bzw. Ladestecker für elektrisch antreibbare Fahrzeuge sind Konzepte bekannt, die zur Verbindung mit einer korrespondierenden und beispielsweise als Ladebuchse ausgebildeten Verbindungsvorrichtung ausgebildet sind. Diesbezüglich wird auf den in der DE 10 2012 105 774 B3 offenbarten Ladestecker verwiesen. In dem Ladestecker sind Leistungskontakte angeordnet, über die elektrische Ladeströme an einen elektrischen Energieempfänger, beispielsweise einem Ackumulator eines Fahrzeuges, übertragbar sind. Der Leistungskontakt ist zur galvanischen Verbindung mit einer elektrischen Energiequelle, beispielsweise eine Ladestation oder im Allgemeinen mit einem elektrischen Versorgungsnetz ausgebildet. Zu diesem Zweck sind die Leistungskontakte jeweils mit einer Ladeleitung fest verbunden. Aufgrund durch die Leistungskontakte fließender Ladeströme heizen sich die Leistungskontakte unweigerlich aufgrund von ohmschen Stromwärmeverlusten auf. Das Aufheizen der Leistungskontakte ist jedoch auf eine Grenztemperaturerhöhung limitiert. So ist beispielsweise gemäß der Norm IEC 62196-3 die Grenztemperaturerhöhung auf 50K limitiert. Um ein Überhitzen zu detektieren und zu vermeiden werden üblicherweise die Steckverbinder mit Temperatursensoren versehen. Sobald die Temperatur einen definierten Grenzwert überschreitet, wird mittels einer Überwachungselektronik durch Ausgabe eines Steuersignals oder mehrerer Steuersignale der Ladevorgang unterbrochen oder der Ladestrom reduziert. Die Temperatursensoren überwachen die Temperatur des Steckverbinders, liefern jedoch lediglich einen Wert für den gesamten Steckverbinder und sind dadurch ungenau, wodurch früher als nötig der Ladevorgang unterbrochen oder der Ladezustand reduziert wird.

Die DE 10 2009 034 886 A1 offenbart eine Steckvorrichtung für ein Ladekabel zur Verbindung eines Elektrofahrzeuges mit einer Ladestation. Dabei umfasst die Steckvorrichtung ein Gehäuse und dem Gehäuse zugeordnete elektrische Kontakte zum Anschluss an eine Anschlusseinrichtung in der Ladestation oder in dem Elektrofahrzeug. Zudem ist in dem Gehäuse ein als Thermistor ausgebildetes Temperaturerfassungsmittel vorgesehen, wobei über das Temperaturerfassungsmittel die Temperatur im Gehäuse auswertbar ist.

Bei der bekannten Bestimmung von Temperaturänderungen in Stromzuleitungen ist nachteilig, dass Änderungen der Temperatur mit Hilfe von Sensoren gemessen werden, die an einem ganz bestimmten Ort der Stromzuleitung lokalisiert sind und nur an diesem speziellen Ort die Änderungen der Temperatur erfassen. Wird beispielsweise ein Elektrofahrzeug am öffentlichen Stromnetz über den Hausanschluss geladen, kommt es innerhalb der Stromzuleitungen über einen längeren Zeitraum zu hohen Ladeströmen. Da keine homogene Infrastruktur des privaten Stromnetzes existiert, und Stromzuleitungen sich beispielsweise durch Kabeldurchmesser, Art der Verlegung, Absicherung der Leitungen unterscheiden, kann es bei hohen Strömen in den Stromzuleitungen lokal zu starker Hitzeentwicklung kommen, und es entstehen Brand- und Verletzungsgefahren. Außerdem sind Stromzuleitungen des öffentlichen Stromnetzes häufig innerhalb von Hauswänden verlegt und somit für Messungen durch Sensoren nicht zugänglich. Somit können Temperaturänderungen mittels Sensoren nicht an allen Punkten der Stromzuleitung erfasst werden. Das gleiche Problem tritt bei den fahrzeuginternen Bordnetzen und Leistungsverbindungen auf.

Es besteht demnach ein Bedarf nach einer hinsichtlich der Temperatur überwachbaren Leitungsverbindung mit einem Steckverbinder zu schaffen, welche die Grundfunktion der Leistungsübertragung aufweist und eine Überwachung über die gesamte Leistungsübertragungsstrecke ermöglicht. Derzeit gibt es im Stand der Technik keine befriedigende und kostengünstige sowie universell einsetzbare Lösung, die eine Kombination einer Temperaturüberwachung am Kontakt und entlang der elektrischen Leitung ermöglicht.

Es ist daher Aufgabe der vorliegenden Erfindung, eine Vorrichtung sowie ein Verfahren zur Temperaturüberwachung einer Leistungsübertragungsstrecke, insbesondere in einem Kraftfahrzeug, bereitzustellen, bei der/dem eine Temperaturüberwachung an den Leistungskontakten im Steckverbinder und entlang der elektrischen Leitung ermöglicht ist und auf diese Weise kritische Überhitzungen sicher verhindernd werden.

Diese Aufgabe wird durch die Merkmalskombination gemäß Patentanspruch 1 gelöst.

Erfindungsgemäß wird eine Vorrichtung zur Temperaturüberwachung einer Leistungsübertragungsstrecke, insbesondere in einem Kraftfahrzeug, mit einem Steckverbinder und wenigstens einer elektrischen Leitung, die an einem Leitungsende mit jeweils einem Leistungskontakt des Steckverbinders verbunden ist, vorgeschlagen. Dabei ist parallel zum Verlauf der wenigstens einen elektrischen Leitung eine Sensorstrecke mit wenigstens einem Temperatursensor zur Erfassung einer Temperatur an einer vorbestimmten Position der elektrischen Leitung vorgesehen. Ferner ist an dem jeweiligen Leistungskontakt des Steckverbinders jeweils ein weiterer Temperatursensor zur Erfassung einer Temperatur an einer vorbestimmten Position des Leistungskontakts vorgesehen. Außerdem ist der jeweilige Temperatursensor mittels jeweils einer Sensorleitung mit jeweils einem in dem Steckverbinder angeordnet ausgebildeten Sensorkontakt für eine Verbindung mit einem Steuergerät verbunden.

Auf diese Weise ist mittels der Temperatursensoren eine Temperaturüberwachung der Leistungsübertragungsstrecke direkt an den Leistungskontakten des Steckverbinders und entlang der elektrischen Leitung ermöglicht. Die Vorrichtung ist für sämtliche Leitungsanwendungen anwendbar, bei denen sich die Temperatur des Kontakts in Abhängigkeit vom Stromfluss und von äußeren Wärmequellen verändert. Des Weiteren ist günstig, dass die Vorrichtung eine Reaktion auf kritische Zustände über das Steuergerät ermöglicht und dadurch eine Vermeidung einer Überhitzung oder eines Brands gewährleistet. Außerdem ist die Vorrichtung vorteilhaft, da diese eine gesamtheitliche Lösung zur Temperaturüberwachung einer Leistungsübertragungsstrecke integriert in einem Steckverbinder bereitstellt.

In einer vorteilhaften Ausführungsvariante ist vorgesehen, dass die Sensorstrecke als ein rohrförmiger Kanal in oder entlang der elektrischen Leitung ausgebildet ist. Dadurch kann ein Temperatursensor an einer gewünschten Position in dem rohrförmigen Kanal angeordnet werden und folglich auch eine Temperatur an einer entsprechenden Position der Leistungsübertragungsstrecke über deren gesamte Erstreckung ermittelt werden.

Vorzugsweise ist die Vorrichtung derart ausgebildet, dass an einem Ende des rohrförmigen Kanals der Sensorstrecke ein Anschlag für einen Temperatursensor vorgesehen ist. Vorteilhaft daran ist, dass eine Anordnung des Temperatursensors an dem Ende des rohrförmigen Kanals der Sensorstrecke vereinfacht ist.

In einem Ausführungsbeispiel der Erfindung ist vorgesehen, dass die Sensorstrecke eine Vielzahl von Temperatursensoren zur Erfassung der Temperatur der elektrischen Leitung aufweist, die voneinander beabstandet entlang der Sensorstrecke angeordnet sind, insbesondere gleichmäßig voneinander beabstandet. Dabei ist günstig, dass die Intervalle, in denen die Temperatur entsprechend der Abstände zwischen den Temperatursensoren der Leistungsübertragungsstrecke bestimmt wird, für die meisten Anwendungen ausreichend genaue Temperaturdaten der Leistungsübertragungsstrecke liefert und deshalb mit einer reduzierten Anzahl von Komponenten eine zuverlässige Temperaturüberwachung gewährleistet ist.

In einer weiteren vorteilhaften Variante ist erfindungsgemäß vorgesehen, dass die Sensorstrecke eine Vielzahl von Temperatursensoren zur Erfassung der Temperatur der elektrischen Leitung aufweist, die kontinuierlich entlang der Sensorstrecke angeordnet sind. Vorteilhaft daran ist, dass bei entsprechend sensiblen Anwendungen eine Temperaturüberwachung der Leistungsübertragungsstrecke in Intervallen zu ungenaue Werte liefert, um eine Überhitzung zu verhindern. Mit einer kontinuierlichen Messung entlang der gesamten Sensorstrecke kann die Temperatur an jeder Position der Leistungsübertragungsstrecke exakt bestimmt werden und die Temperaturüberwachung ist genauer und sicherer.

Die erfindungsgemäße Vorrichtung ist in einer Ausführungsvariante ausgebildet, dass der jeweilige Temperatursensor ein faseroptisches Element, ein Thermoelement oder ein Thermistor ist. Diese Komponenten sind besonders für eine Anwendung bei einer als rohrförmiger Kanal ausgebildeten Sensorstrecke und an Leistungskontakten eines Steckverbinders geeignet.

Ferner ist eine Ausführung günstig, bei welcher der jeweilige Temperatursensor an einer vorbestimmten Position des Leistungskontakts mittels einer Verschraubung oder eines Stecksystems mit einem Verriegelungsmechanismus fixiert ist. Auf diese Weise kann der jeweilige Temperatursensor den Anforderungen entsprechend an dem Leistungskontakt befestigt werden.

Weiter vorteilhaft ist es, wenn der jeweilige Leistungskontakt eine Steckzone, eine sich unmittelbar an die Steckzone anschließende Sensorzone sowie eine sich an die Sensorzone anschließende Kabelanschlusszone aufweist und der jeweilige Temperatursensor an der Sensorzone näher zur Steckzone als zur Kabelanschlusszone angeordnet ist. Dadurch wird die Temperatur an der hinsichtlich einer Überhitzung kritischen Position des Leistungskontakts bestimmt.

In einer alternativen Ausführung der vorliegenden Vorrichtung ist ferner vorgesehen, dass der jeweilige Leistungskontakt ein gedrehter oder gestanzter Rundkontakt ist und der jeweilige Temperatursensor an einem Außenmantel des Leistungskontakts befestigt ist und in diesem Bereich in einer Steckrichtung kanalförmige Ausnehmungen im Leistungskontakt vorgesehen sind. Für einen Rundkontakt ist diese Anordnung des Temperatursensors vorteilhaft, da der Außenmantel eines Rundkontakts benachbart zu weiteren Komponenten angeordnet ist und deswegen besonders hinsichtlich einer Überhitzung zu schützen ist.

Des Weiteren wird erfindungsgemäß ein Kraftfahrzeug mit einer Vorrichtung zur Temperaturüberwachung einer Leistungsübertragungsstrecke gemäß der vorstehenden Offenbarung und einem Steuergerät vorgeschlagen, in dem Temperaturgrenzwerte für den jeweiligen Temperatursensor hinterlegt sind. Besonders günstig daran ist, dass die Vorrichtung zur Temperaturüberwachung einer Leistungsübertragungsstrecke eines Kraftfahrzeugs geeignet ist.

Erfindungsgemäß wird ferner ein Verfahren zur Temperaturüberwachung einer Leistungsübertragungsstrecke, insbesondere in einem Kraftfahrzeug, mit einer Vorrichtung gemäß der vorstehenden Offenbarung und einem Steuergerät vorgeschlagen, in dem insbesondere Temperaturgrenzwerte für den jeweiligen Temperatursensor hinterlegt sind, das die Schritte umfasst:
Zunächst erfolgt ein kontinuierliches oder diskontinuierliches Erfassen einer jeweiligen Temperatur an einer vorbestimmten Position des Leistungskontakts des Steckverbinders und gleichzeitig an einer vorbestimmten Position der elektrischen Leitung mittels der Temperatursensoren.

Anschließend wird die erfasste Temperatur des jeweiligen Temperatursensors über die jeweilige Sensorleitung und den jeweiligen Sensorkontakt zu dem Steuergerät übertragen.

Daraufhin wird ein Vergleichen der Temperatur des jeweiligen Temperatursensors mit entsprechenden in dem Datenspeicher des Steuergeräts hinterlegten Temperaturgrenzwerten durchgeführt. Bei einer Überschreitung des jeweiligen Temperaturgrenzwerts eines Temperatursensors reduziert oder variiert das Steuergerät einen Stromfluss durch die Leistungsübertragungsstrecke bzw. die entsprechende elektrische Leitung bzw. den entsprechenden Leistungskontakt oder modifiziert die Leistung entsprechend.

Entsprechend ist auf diese Weise mittels der Temperatursensoren eine Temperaturüberwachung der Leistungsübertragungsstrecke direkt an den Leistungskontakten des Steckverbinders und entlang der elektrischen Leitung ermöglicht. Auf diese Weise sind sämtliche Positionen überwacht, an denen sich die Temperatur in Abhängigkeit vom Stromfluss und von äußeren Wärmequellen verändert. Außerdem ist günstig, dass die Vorrichtung eine Reaktion auf kritische Zustände über das Steuergerät ermöglicht und dadurch eine Vermeidung einer Überhitzung oder eines Brands gewährleistet. Beispielsweise ändert das Steuergerät bei einer Überhitzung einer elektrischen Leitung das Pulspausenverhältnis mittels eines Pulsmodulationsverfahrens.

In einer bevorzugten Ausführung des Verfahrens ist ein absoluter Temperaturwert für den jeweiligen Temperatursensor in dem Steuergerät als Temperaturgrenzwert hinterlegt, der beim Vergleichen mit der Temperatur des jeweiligen Temperatursensors verglichen wird. In einer vorteilhaften Ausführungsvariante des Verfahrens ist vorgesehen, dass eine maximale Temperaturdifferenz der jeweiligen Temperatursensoren in dem Steuergerät als Temperaturgrenzwert hinterlegt ist und beim Vergleichen eine Differenz der Temperaturen der jeweiligen Temperatursensoren zueinander ermittelt sowie mit der maximalen Temperaturdifferenz verglichen wird. Vorteilhaft daran ist, dass eine Temperaturschwelle festgelegt wird, ab der eine Überhitzung für den jeweiligen Anwendungsfall eintritt, und diese unmittelbar erkannt wird.

Ferner wird das Verfahren in einem Ausführungsbeispiel derart durchgeführt, dass, bei einer Überschreitung des jeweiligen Temperaturgrenzwerts eines Temperatursensors, das Steuergerät eine Warnmeldung über eine mit dem Steuergerät verbundene Anzeige ausgibt. Auf diese Weise kann ein Anwender darauf hingewiesen werden, dass eine Überhitzung vorliegt und beispielsweise auch an welcher Position der elektrischen Leitung bzw. der Leistungskontakte.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

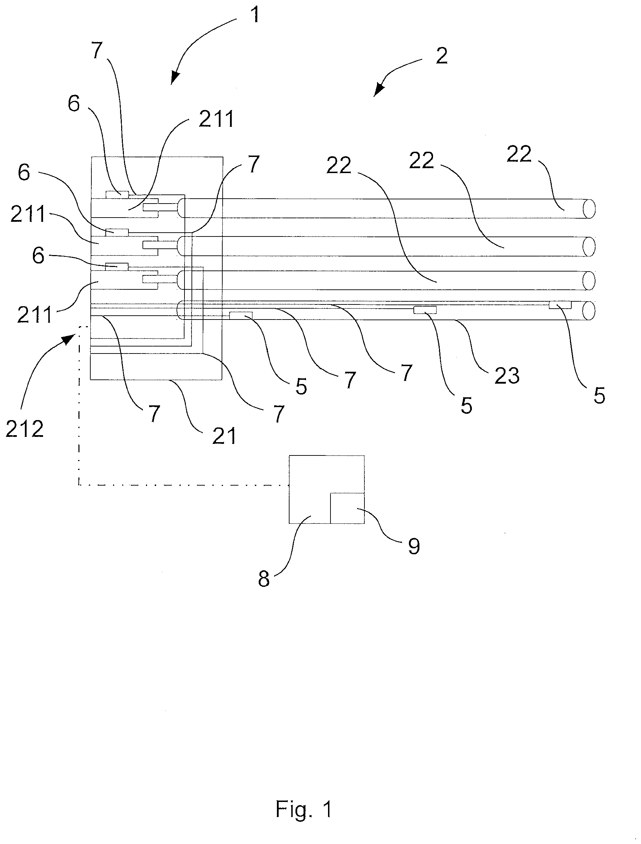

- Fig. 1: eine schematische Ansicht einer Vorrichtung zur Temperaturüberwachung einer Leistungsübertragungsstrecke.

In Figur 1 ist eine schematische Ansicht einer Vorrichtung 1 zur Temperaturüberwachung einer Leistungsübertragungsstrecke 2 in einem Kraftfahrzeug dargestellt. Die Leistungsübertragungsstrecke 2 umfasst einen Steckverbinder 21 und drei elektrische Leitungen 22, die an einem Leitungsende mit jeweils einem Leistungskontakt 211 des Steckverbinders 21 verbunden sind.

An dem jeweiligen Leistungskontakt 211 des Steckverbinders 21 ist jeweils ein Temperatursensor 6 zur Erfassung einer Temperatur an einer vorbestimmten Position des Leistungskontakts 211 vorgesehen. Der jeweilige Leistungskontakt 211 weist hierfür eine Steckzone, eine sich unmittelbar an die Steckzone anschließende Sensorzone und eine sich an die Sensorzone anschließende Kabelanschlusszone auf. Dabei ist der jeweilige Temperatursensor 6 an der Sensorzone näher zur Steckzone als zur Kabelanschlusszone angeordnet. Der jeweilige Temperatursensor 6 ist ein faseroptisches Element und an einer vorbestimmten Position des Leistungskontakts 211 mittels eines Stecksystems mit einem Verriegelungsmechanismus fixiert.

Darüber hinaus ist der jeweilige Leistungskontakt 211 ein gedrehter Rundkontakt und der jeweilige Temperatursensor 6 ist an einem Außenmantel des Leistungskontakts 211 befestigt. Ferner sind in diesem Bereich in einer Steckrichtung kanalförmige Ausnehmungen im Leistungskontakt 211 vorgesehen.

Parallel zum Verlauf der drei elektrischen Leitungen 22 ist eine Sensorstrecke 23 mit drei Temperatursensoren 5 zur Erfassung einer Temperatur an einer vorbestimmten Position der elektrischen Leitung 22 vorgesehen. Der jeweilige Temperatursensor 5 ist ein faseroptisches Element. Außerdem ist die Sensorstrecke 23 als ein rohrförmiger Kanal entlang der drei elektrischen Leitungen 22 ausgebildet. An einem nicht in Figur 1 dargestellten Ende des rohrförmigen Kanals der Sensorstrecke 23 ist ein Anschlag für einen Temperatursensor 5 vorgesehen. Die Temperatursensoren 5 der Sensorstrecke 23 sind entlang der Sensorstrecke 23 gleichmäßig voneinander beabstandet angeordnet.

Der jeweilige Temperatursensor 5, 6 ist mittels jeweils einer Sensorleitung 7 mit jeweils einem in dem Steckverbinder 21 ausgebildeten Sensorkontakt 212 für eine Verbindung mit einem Steuergerät 8 verbunden. Auf diese Weise ist ein kontinuierliches oder diskontinuierliches Erfassen einer jeweiligen Temperatur an einer vorbestimmten Position des Leistungskontakts 211 des Steckverbinders 21 und gleichzeitig an einer vorbestimmten Position der elektrischen Leitung 22 mittels der Temperatursensoren 5, 6 ermöglicht.

Die jeweiligen Sensorkontakte 212 sind mit einem Steuergerät 8 verbunden, in dem Temperaturgrenzwerte 9 für den jeweiligen Temperatursensor 5, 6 hinterlegt sind. Die erfasste Temperatur des jeweiligen Temperatursensors 5, 6 ist über die jeweilige Sensorleitung 7 und den jeweiligen Sensorkontakt 212 zu dem Steuergerät 8 übertragbar. Das Steuergerät 8 ist zum Vergleichen der Temperatur des jeweiligen Temperatursensors 5, 6 mit entsprechenden in dem Datenspeicher des Steuergeräts 8 hinterlegten Temperaturgrenzwerten 9 ausgebildet. Bei einer Überschreitung des jeweiligen Temperaturgrenzwerts 9 eines Temperatursensors 5, 6 ist ein Stromfluss durch die Leistungsübertragungsstrecke 2 bzw. die entsprechende elektrische Leitung 22 bzw. den entsprechenden Leistungskontakt 211 mittels des Steuergeräts 8 reduzierbar oder variierbar oder die Leistung entsprechend modifizierbar.

Hierfür ist ein absoluter Temperaturwert für den jeweiligen Temperatursensor 5, 6 in dem Steuergerät als Temperaturgrenzwert 9 hinterlegt, der beim Vergleichen mit der Temperatur des jeweiligen Temperatursensors 5, 6 verglichen wird. Außerdem ist eine maximale Temperaturdifferenz der jeweiligen Temperatursensoren 5, 6 in dem Steuergerät als Temperaturgrenzwert 9 hinterlegt. Beim Vergleichen wird eine Differenz der Temperaturen der jeweiligen Temperatursensoren 5, 6 zueinander ermittelt und mit der maximalen Temperaturdifferenz verglichen.

Darüber hinaus ist das Steuergerät 8 ausgebildet über eine mit dem Steuergerät 8 verbundene Anzeige eine Warnmeldung auszugeben, sofern der jeweilige Temperaturgrenzwert 9 eines Temperatursensors 5, 6 überschritten ist.

## Patentansprüche

1. Vorrichtung (1) zur Temperaturüberwachung einer Leistungsübertragungsstrecke (2), insbesondere in einem Kraftfahrzeug, mit einem Steckverbinder (21) und wenigstens einer elektrischen Leitung (22), die an einem Leitungsende mit jeweils einem Leistungskontakt (211) des Steckverbinders (21) verbunden ist, wobei parallel zum Verlauf der wenigstens einen elektrischen Leitung (22) eine Sensorstrecke (23) mit wenigstens einem Temperatursensor (5) zur Erfassung einer Temperatur an einer vorbestimmten Position der elektrischen Leitung (22) vorgesehen ist, wobei an dem jeweiligen Leistungskontakt (211) des Steckverbinders (21) jeweils ein weiterer Temperatursensor (6) zur Erfassung einer Temperatur an einer vorbestimmten Position des Leistungskontakts (211) vorgesehen ist, wobei der jeweilige Temperatursensor (5, 6) mittels jeweils einer Sensorleitung (7) mit jeweils einem in dem Steckverbinder (21) ausgebildeten Sensorkontakt (212) für eine Verbindung mit einem Steuergerät (8) verbunden ist.

2. Vorrichtung (1) gemäß Anspruch 1, **dadurch gekennzeichnet, dass** die Sensorstrecke (23) als ein rohrförmiger Kanal in oder entlang der elektrischen Leitung (22) ausgebildet ist.

3. Vorrichtung (1) gemäß dem vorhergehenden Anspruch, **dadurch gekennzeichnet, dass** an einem Ende des rohrförmigen Kanals der Sensorstrecke (23) ein Anschlag für einen Temperatursensor (5, 6) vorgesehen ist.

4. Vorrichtung (1) gemäß einem der vorhergehenden Ansprüche 1 bis 3,
**dadurch gekennzeichnet, dass** die Sensorstrecke (23) eine Vielzahl von Temperatursensoren (5) zur Erfassung der Temperatur der elektrischen Leitung (22) aufweist, die voneinander beabstandet entlang der Sensorstrecke (23) angeordnet sind, insbesondere gleichmäßig voneinander beabstandet.

5. Vorrichtung (1) gemäß einem der vorhergehenden Ansprüche 1 bis 3,
**dadurch gekennzeichnet, dass** die Sensorstrecke (23) eine Vielzahl von Temperatursensoren (5) zur Erfassung der Temperatur der elektrischen Leitung (22) aufweist, die kontinuierlich entlang der Sensorstrecke (23) angeordnet sind.

6. Vorrichtung (1) gemäß einem der Ansprüche 1 bis 5, **dadurch gekennzeichnet, dass** der jeweilige Temperatursensor (5, 6) ein faseroptisches Element, ein Thermoelement oder ein Thermistor ist.

7. Vorrichtung (1) gemäß einem der vorhergehenden Ansprüche,
**dadurch gekennzeichnet, dass** der jeweilige Temperatursensor (6) an einer vorbestimmten Position des Leistungskontakts (211) mittels einer Verschraubung oder eines Stecksystems mit einem Verriegelungsmechanismus fixiert ist.

8. Vorrichtung (1) gemäß einem der vorhergehenden Ansprüche,
**dadurch gekennzeichnet, dass** der jeweilige Leistungskontakt (211) eine Steckzone, eine sich unmittelbar an die Steckzone anschließende Sensorzone und eine sich an die Sensorzone anschließende Kabelanschlusszone aufweist, wobei der jeweilige Temperatursensor an der Sensorzone näher zur Steckzone als zur Kabelanschlusszone angeordnet ist.

9. Vorrichtung (1) gemäß einem der vorhergehenden Ansprüche,
**dadurch gekennzeichnet, dass** der jeweilige Leistungskontakt (211) ein gedrehter oder gestanzter Rundkontakt ist und der jeweilige Temperatursensor (6) an einem Außenmantel des Leistungskontakts (211) befestigt ist und in diesem Bereich in einer Steckrichtung kanalförmige Ausnehmungen im Leistungskontakt vorgesehen sind.

10. Kraftfahrzeug mit einer Vorrichtung (1) zur Temperaturüberwachung einer Leistungsübertragungsstrecke (2) gemäß einem der vorhergehenden Ansprüche und einem Steuergerät (8), in dem Temperaturgrenzwerte (9) für den jeweiligen Temperatursensor (5, 6) hinterlegt sind.

11. Verfahren zur Temperaturüberwachung einer Leistungsübertragungsstrecke (2), insbesondere in einem Kraftfahrzeug, mit einer Vorrichtung (1) gemäß einem der vorhergehenden Ansprüche und einem Steuergerät (8), in dem insbesondere Temperaturgrenzwerte (9) für den jeweiligen Temperatursensor (5, 6) hinterlegt sind, die Schritte umfassend:
a. Kontinuierliches oder diskontinuierliches Erfassen einer jeweiligen Temperatur an einer vorbestimmten Position des Leistungskontakts (211) des Steckverbinders (21) und gleichzeitig an einer vorbestimmten Position der elektrischen Leitung (22) mittels der Temperatursensoren (5, 6),
b. Übertragen der erfassten Temperatur des jeweiligen Temperatursensors (5, 6) über die jeweilige Sensorleitung (7) und den jeweiligen Sensorkontakt (212) zu dem Steuergerät (8),
c. Vergleichen der Temperatur des jeweiligen Temperatursensors (5, 6) mit entsprechenden in dem Datenspeicher des Steuergeräts (8) hinterlegten Temperaturgrenzwerten (9),
wobei bei einer Überschreitung des jeweiligen Temperaturgrenzwerts (9) eines Temperatursensors (5, 6) das Steuergerät (8) einen Stromfluss durch die Leistungsübertragungsstrecke (2) bzw. die entsprechende elektrische Leitung (22) bzw. den entsprechenden Leistungskontakt (211) reduziert oder variiert oder die Leistung entsprechend modifiziert.

12. Verfahren gemäß Anspruch 11, **dadurch gekennzeichnet, dass** ein absoluter Temperaturwert für den jeweiligen Temperatursensor (5, 6) in dem Steuergerät als Temperaturgrenzwert (9) hinterlegt ist, der beim Vergleichen mit der Temperatur des jeweiligen Temperatursensors (5, 6) verglichen wird.

13. Verfahren gemäß Anspruch 11 oder 12 **dadurch gekennzeichnet, dass** eine maximale Temperaturdifferenz der jeweiligen Temperatursensoren (5, 6) in dem Steuergerät als Temperaturgrenzwert (9) hinterlegt ist, wobei beim Vergleichen eine Differenz der Temperaturen der jeweiligen Temperatursensoren (5, 6) zueinander ermittelt und mit der maximalen Temperaturdifferenz verglichen wird.

14. Verfahren gemäß einem der Ansprüche 11 bis 13, **dadurch gekennzeichnet, dass** bei einer Überschreitung des jeweiligen Temperaturgrenzwerts (9) eines Temperatursensors (5, 6) das Steuergerät (8) eine Warnmeldung über eine mit dem Steuergerät (8) verbundene Anzeige ausgibt.
